# EUROPEAN PATENT SPECIFICATION

(11) **EP 0 620 668 B1**
(45) Date of publication and mention of the grant of the patent: **07.06.2000**
(21) Application number: 94302683.1
(22) Date of filing: 14.04.1994
(51) Int. Cl.: H04L 27/38

(54) **Removal of plus/minus 90 and 180 phase errors in QAM receivers**
Beseitigung von 90 und 180 Phasenfehlern in QAM-Empfängern
Elimination d'erreurs de phase à 90 et 180 dans des récepteurs MAQ

(30) Priority: 15.04.1993 KR 9306312
(43) Date of publication of application: 19.10.1994
(73) Proprietor: SAMSUNG ELECTRONICS CO., LTD., Suwon-City, Kyungki-do (KR)
(72) Inventor: Min, Byong-Min, Tobong-gu, Seoul (KR)
(74) Representative: Mohun, Stephen John

(56) References cited:
- EP-A- 0 052 463
- EP-A- 0 208 537
- US-A- 3 806 647
- PATENT ABSTRACTS OF JAPAN vol. 15, no. 159 (E-1059) 22 April 1991 & JP-A-03 032 117 (MITSUBISHI) 12 February 1991
- PATENT ABSTRACTS OF JAPAN vol. 15, no. 159 (E-1059) 22 April 1991 & JP-A-03 032 131 (MITSUBISHI) 12 February 1991
- IEEE GLOBAL TELECOMMUNICATIONS CONFERENCE, GLOBECOM'83, 28 NOV. - 1 DEC. 1983, SAN DIEGO, CALIFORNIA, US, vol.2 pages 30.7.1 - 30.7.4 SHU LIN ET AL.: 'SELF-SYNCHRONIZING OUTER CODES FOR THE TDRSS DECODER'

## Description

The present invention relates to a system for restoring multi level/phase modulation data for use in a digital transmission system, and more particularly, to a method for restoring multi level/phase modulation data to further improve reliability of data restoration by correcting a phase error which is produced in demodulation data, and apparatus therefor.

A general digital transmission system should perform data transmission having predetermined transmission velocity and reliability even if a transmission channel is in an inferior condition. To do so, the data transmission system adopts an error correcting coding/decoding method, and recently a Trellis coded modulation (hereinafter, abbreviated as TCM) method. The TCM method combines a data modulation with an error correction codification, and improves a coding gain as bandwidth of the transmission data is increased. Since the TCM technology is already known in the digital communication field, the detailed description thereof will be omitted. To improve a data transmission capability, an interleaving and deinterleaving method is also used in the digital transmission system.

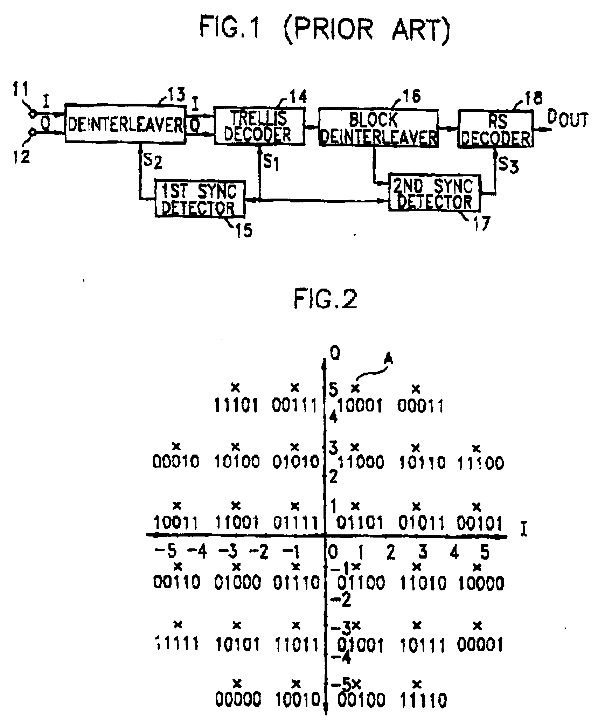

Figure 1 shows an example of a conventional prior art apparatus for restoring multi level/phase modulation data. The Figure 1 apparatus shows a circuit for receiving the data intended to be transmitted which is interleaved, Reed Solomon (RS) coded and Trellis coded in the transmitting end to then be modulated and transmitted, demodulating the received data and restoring the demodulated data into the original data.

In Figure 1, an I-axis data being in-phase demodulated in a demodulator (not shown) and a Q-axis data being quadrature-phase are input through two input ports 11 and 12, respectively. Since the respective I-axis and Q-axis data has been interleaved, a deinterleaver 13 deinterleaves the respective I-axis and Q-axis data based on a predetermined sync position and outputs the deinterleaved data. The I-axis and Q-axis data output from deinterleaver 13 is Trellis-decoded in a Trellis decoder 14. Here, Trellis decoder 14 discriminates whether the Trellis-decoded data is synchronised. For such a sync discrimination, a Viterbi algorithm is used. Trellis decoder 14 repetitively performs a process of selecting a path where a Hamming distance is shortest among paths which the data input to the respective state at a Trellis diagram, to find a path having the minimum Hamming distance. Then, if a cumulative distance of the found path is larger than a predetermined reference value, Trellis decoder 14 discriminates that the sync does not match, to then generate a predetermined out-of-sync signal S₁. Here, the predetermined reference value is determined by a designer, and is experimentally obtained. Out-of-sync signal S₁ output from Trellis decoder 14 is supplied to a first sync detector 15. First sync detector 15 outputs a predetermined control signal S₂ so as to be supplied to deinterleaver 13 whenever out-of-sync signal S₁ is input. Control signal S₂ is a signal which adjusts a sync position for a deinterleaving operation of deinterleaver 13. Deinterleaver 13 slides the sync position whenever such a sync adjustment control signal S₂ is input thereto, and performs a deinterleaving operation at the new sync position. Then, the data deinterleaved according to the new sync position is again supplied to Trellis decoder 14. Trellis decoder 14 Trellis-decodes the input data again and discriminates if the sync is matched. Trellis decoder 14 finds a sync from the input data by repetitively performing a set of the sync detection processes. If the sync is detected, the data decoded in Trellis decoder 14 is supplied to a block deinterleaver 16. Block deinterleaver 16 again deinterleaves, in units of a block, the data which has been interleaved in units of a block in a modulator of a transmission end. A second sync detector 17 detects a sync of the block data which is deinterleaved in block deinterleaver 16. Second sync detector 17 is disabled by out-of-sync signal S₁ output from Trellis decoder 14. The block data output from block deinterleaver 16 is supplied to a Reed Solomon (RS) decoder 18. RS decoder 18 RS-decodes the data which has been RS-coded to reinforce an error correction function of the transmission data in the transmission end. Here, RS decoder 18 decodes the block data while matching a block sync signal S₃ which is supplied from second sync detector 17.

Such a conventional restoring apparatus of the multi level/phase modulation data does not restore exactly the original information data when a phase error occurs in the demodulated I- and Q-channel data.

To solve the problem of the phase error, a differential encoding/decoding method is currently used. The differential encoding method does not transmit the data corresponding to the absolute value of the phase, but transmits only data corresponding to phase difference. Referring to 32-tuple quadrature amplitude modulation (QAM) data which is Trellis-coded according to the constellation of Figure 2, the differential encoding/decoding method will be described below.

A codeword used in the 32-tuple QAM data which is Trellis-encoded according to the Figure 2 constellation is a 5-bit (Y₄Y₃Y₂Y₁Y₀) data. Of these bits, the upper three bits (Y₄Y₃Y₂) are uncoded bits, and the lower two bits (Y₁Y₀) are coded bits. Also, at the 32-tuple QAM data, uncoded bits (Y₄Y₃Y₂) are mapped so as to be 90° rotationally invariant, and the coded bits (Y₁Y₀) are mapped so as to have complimentary relationship at a time of 180° rotation. For example, in case of a codeword "A" of Figure 2, a value of the uncoded bit, "100" corresponds to an identical bit value "100" with respect to ±90° rotation, while a value of the codeword "01" corresponds to a bit value "10" which has complementary relationship with each other with respect to ±180° rotation. Thus, when a phase error of ±180° is generated in the Trellis coded 32-tuple QAM data as described above, such an error can be easily discriminated.

However, such a differential coding/decoding method cannot find sync data in a demodulator when a phase error of ±90° is generated. Accordingly, correct decoding cannot be performed.

European patent application 0 208 537 shows a receiver of a digital communication system designed in order to maintain frame synchronization between the receiver and the transmitter. In this system, interleaved serial coordinate pairs are obtained after the demodulation phase. This document however does not mention the problem of phase ambiguity that occurs in such systems when the receiver does not have a reliable phase reference. Another distinction between this document and the prior art previously disclosed as well as the present invention is that in this document, coded data is provided in a serial fashion on a single channel to a deinterleaver.

US 3,806,647 discloses a phase ambiguity resolution system using convolutional coding - threshold decoding. This document uses a system of counting which, under extreme loss of synchronization conditions, triggers a switch over between the two different channels.

It is an object of the present invention to provide a method for restoring multi level/phase modulation data for improving reliability of the restored data by effectively solving various phase errors which are generated in the multi level/phase modulated data.

Another object of the present invention is to provide an apparatus for restoring a multi level/phase modulation data.

According to one aspect of the present invention there is provided a method for receiving multilevel/phase modulation data and restoring the multilevel/phase modulation data into original data, the method comprising the steps of: receiving first and second axis data on first and second respective channels, said first and second axis data being obtained by demodulating the received multilevel/phase modulation data; deinterleaving the first axis data from the first channel using a first deinterleaving means and deinterleaving the second axis data from the second channel using a second deinterleaving means; Viterbi decoding the deinterleaved data and discriminating if the Viterbi decoded data is synchronised; shifting a data deinterleaving sync position at the deinterleaving step by a predetermined interval when the Viterbi-decoded data is not synchronised; and, the method being characterized in that the first axis data and the second axis data are exchanged with each other if a sync is not matched after repetitively discriminating whether the sync is matched while the sync position at the deinterleaving sync shifting step is shifted successively for one cycle, exchanging of the first and second axis data being achieved by switching the first axis data received on the first channel to thereafter be deinterleaved using the second deinterleaving means and switching the second axis data received on the second channel, to thereafter be deinterleaved using the first deinterleaving means.

Preferably, the first axis data comprises I-axis data and the second axis data comprises Q-axis data.

Said step of exchanging the first axis data and the second axis data with each other may comprise the steps:
generating a predetermined out-of-sync signal if the sync is not matched as a result of performing said Viterbi decoding;
counting the out-of-sync signal;
generating a control signal when the counted result is equal to the number of times which shifts the deinterleaving sync position for one cycle; and
exchanging the axes of the first axis data and second axis data with each other with respect to the control signal.

Preferably, said step of exchanging the axes comprises the steps of:
selecting the first axis data according to the control signal to supply the selected first axis data to the second axis transmission channel; and
selecting the second axis data according to the control signal to supply the selected second axis data to the first axis transmission channel.

Preferably, said step of switching the first axis to the second axis comprises the step of inverting the first axis data and converting the inverted data into the second axis data.

According to another aspect of the present invention, there is provided an apparatus for receiving multi level/phase modulation data and restoring the multi level/phase modulation data into original data into original data, said apparatus comprising: input ports arranged, in use, to receive first and second axis data on first and second respective channels, said first and second axis data being obtained by demodulating the received multi level/phase modulation data; an axis exchanger portion arranged in use to receive the first axis data, the second axis data and a predetermined control signal, which control signal is normally in a first state, and selectively to exchange the axes of the first axis data and the second axis data according to a change in state of the control signal; deinterleaving means arranged, in use, to deinterleave the first axis data supplied on the first channel using a first deinterleaver and to deinterleave the second axis data supplied on the second channel using a second deintereaver when the control signal is in the first state and, when the control signal is changed to a second state, the deinterleaving means being arranged such that the second deinterleaver is arranged to deinterleave the first axis data and the first deinterleaver is arranged to deinterleave the second axis data; a Viterbi-decoding portion arranged, in use, to decode the deinterleaved data according to a Viterbi algorithm and to output a predetermined out-of-sync signal when it is discriminated that the Viterbi-decoded data is synchronized as a result; and a sync detecting portion arranged, in use, to detect the out-of-sync signal output from the Viterbi-decoding portion to supply a sync adjustment control signal for shifting a data deinterleaving sync position to the deinterleaving means and to change the control signal to the second state and thereby control axis exchange by means of the axis exchanger.

Preferably, the first axis data comprises I-axis data, and the second axis data comprises Q-axis data.

Said axis exchanger portion may comprise:
a first switch (SW1) of which the input port is connected to a first axis data input terminal, a first output terminal is an input port of said first deinterleaver, and a second output terminal is connected to an input port of said second deinterleaver via an inverter; and
a second switch (SW2) of which the input port is connected to a second axis data input terminal, a first output terminal is the other input port of said second deinterleaver, and a second output terminal is connected to the other input port of said first deinterleaver.

Preferably, said sync detector comprises:
a counter arranged in use to receive an out-of-sync signal supplied from said Viterbi decoder as clock and to perform a counting; and
means to generate said control signal for said axis exchanger when the counted result of said counter reaches a value of a predetermined modulo-N.

Preferably, said modulo-N value of said counter is equal to the number of times of continuously performing for one cycle when the deinterleaving sync is shifted according to said sync adjustment control signal in said deinterleaver.

An embodiment of the present invention will now be described by way of example only, with reference to the accompanying diagrammatic drawings in which:
Figure 1 is a block diagram showing an example of a conventional prior art apparatus for restoring multi level/phase modulation data,
Figure 2 is a view showing a constellation of general multi level/phase modulation data, and
Figure 3 is a block diagram showing an apparatus for restoring multi level/phase modulation data according to a preferred embodiment of the present invention.

A preferred embodiment of the present invention will be described below in more detail with reference to the accompanying drawings.

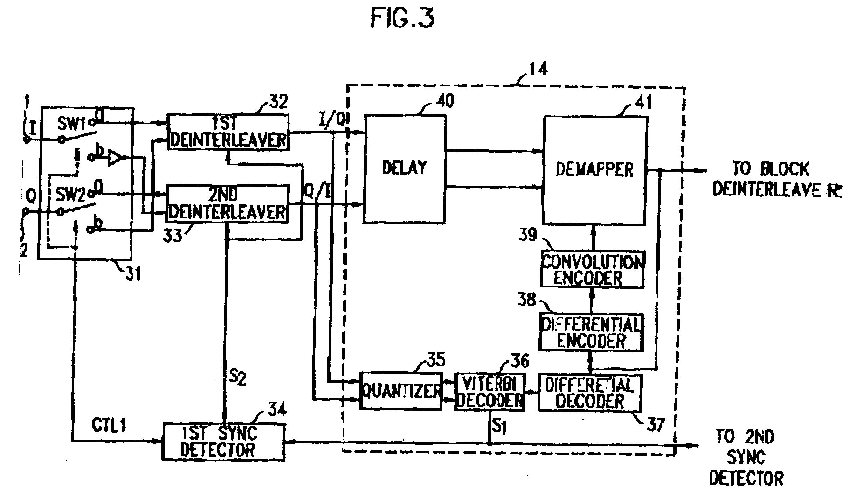

In Figure 3, showing an apparatus for restoring multi level/phase modulation data according to a preferred embodiment of the present invention, I-axis data and Q-axis data is applied to the Figure 3 apparatus through two input ports 11 and 12, respectively. The I-axis data and Q-axis data is supplied to an axis exchanger portion 31, respectively. Axis exchanger portion 31 includes two switches SW1 and SW2 which are switched according to a predetermined control signal CTL1. The two switches SW1 and SW2 perform switching operations for exchanging phase axes of the I-axis and Q-axis data input respectively according to control signal CTL1. Such a phase axis exchanging operation will be later described in detail. A first deinterleaver 32 and a second deinterleaver 33 deinterleave the data which is input from first switch SW1 and second switch SW2 of axis exchanger portion 31, respectively. Here, first deinterleaver 32 and second deinterleaver 33 deinterleave the data of the axis which is selected by axis exchanger portion 31, respectively. The I-axis signal which is applied to first deinterleaver 32 is not applied to second deinterleaver 33, and the Q-axis signal which is applied to first deinterleaver 32 is not applied to second deinterleaver 33. The data respectively deinterleaved in first and second deinterleavers 32 and 33 is supplied to a Trellis decoder 14. Trellis decoder 14 includes a quantizer 35, a Viterbi decoder 36, a differential decoder 37, a differential encoder 38, a convolution encoder 39, a delay 40 for delaying input data for a predetermined time of interval and demapper 41. Quantizer 35 transforms the input I-axis and Q-axis data into a Viterbi coded quadrature phase shift keying format, and outputs the transformed data. That is, the data of a TCM format which is output from first and second deinterleavers 32 and 33 is quantized as data having a phase of the decodable format in Viterbi decoder 36. Viterbi decoder 36 decodes the quantized symbols which are supplied from quantizer 35 according to the Viterbi algorithm. At the same time, a predetermined out-of-sync signal S₁ based on cumulative distance of the symbols is output. Particularly, when the cumulative distance of the symbols is larger than a predetermined reference value, Viterbi decoder 36 outputs a predetermined out-of-sync signal S₁. The out-of-sync signal S₁ output from Viterbi decoder 36 is supplied to a sync detector 34. Then, sync detector 34 generates a predetermined sync adjustment control signal S₂ and supplies the sync adjustment control signal S₂ to first and second deinterleavers 32 and 33, respectively. When first and second deinterleavers 32 and 33 receive sync adjustment signal S₂, a deinterleaving sync position is shifted by a predetermined interval, to deinterleave the input data according to the shifted sync position. Sync adjustment control signal S₂ is generated based on the detected out-of-sync signal S₁. Accordingly, if a series of processes which shift the deinterleaving sync position is repetitively performed, Viterbi decoder 36 receives the deinterleaved data according to the matched sync from deinterleavers 32 and 33, Viterbi-decodes the received data, and outputs the Viterbi-decoded data.

A differential decoder 37 differentially decodes the output data from Viterbi-decoder 36 and outputs the differentially decoded data. For example, when the differentially decoded data is composed of a codeword having three uncoded bits Y₄Y₃Y₂ and two coded bits Y₁Y₀ as shown in Figure 2 Differential decoder 37 outputs the data having two-bit length which is obtained by decoding the encoded bits, together with the uncoded bits which are not decoded. The output data from differential decoder 37 is again differentially encoded in differential encoder 38. As a result, the coded data obtained in differential encoder 36 becomes data of the same format as the differentially encoded data in a transmission end. Convolution encoder 39 convolution-encodes the data supplied from differential encoder 38 and outputs the convolution-encoded data. The reason why the differentially encoded data is respectively encoded in differential encoder 38 and convolution encoder 39 is for changing the output data from differential decoder 37 into a data format which can be processed in demapper 41.

The I-axis data and the Q-axis data output from first and second deinterleavers 32 and 33 is delayed for a predetermined time of interval in delay 40 and then the delayed data is applied to demapper 41. If so, demapper 41 receives the output data of delay 40 and the output data of convolution encoder 39 and determines the data corresponding to the uncoded bit of the codeword based on the output data of convolution encoder 39 to output the determined data. The uncoded bit and the encoded bit output from differential decoder 37 constitutes a decoded codeword, and supplies the constituted codeword to block deinterleaver 16 of Figure 1.

However, if the phase error is ±90°, Viterbi decoder 36 cannot detect a sync. Accordingly, out-of-sync signal S₁ is continuously generated and first and second deinterleavers 32 and 33 which receive out-of-sync signal S₁ continuously shift the deinterleaving sync position. Therefore, if the sync is not exactly detected, the system can be in an operational state of an infinite loop.

Thus, to solve a ±90° phase error, sync detector 34 includes a counter (not shown) having a value of a predetermined modulo-N to count out-of-sync signal S₁ supplied from Viterbi decoder 36. Here, the value of the modulo-N in the counter is the same as the number of times which the respective interleavers shift the sync position according to sync adjustment control signal S₂ within an interval from the sync data of the data input in first and second deinterleavers 32 and 33 to the next sync data. Thus, the sync position is repetitively shifted for one cycle, to thereby enable sync detector 34 to generate a predetermined control signal CTL1. Then, axis exchanger 31 receives control signal CTL1 and controls first and second switches SW1 and SW2, respectively. Thus, the input terminals of first and second switches SW1 and SW2 are connected to the output terminals "b" according to control signal CTL1, respectively. As a result, axis exchanger 31 exchanges the I-axis and the Q-axis with each other. That is, the I-axis data applied through input port 11 is converted into the Q-axis data by passing through first switch SW1, so as to be supplied to second deinterleaver 33. The Q-axis data applied through the other input port 12 is converted into the I-axis data by passing through second switch SW2, so as to be supplied to first deinterleaver 32. Here, an inverter which is connected to a terminal "b" of first switch SW1 is used during the axis exchange, that is, for converting the values on the I-axis and the Q-axis of the data constellation which is generated during the +90° phase conversion. For example, when a point "A" in Figure 2 is phase-converted by -90° in a counterclockwise direction, the co-ordinate values of the I-axis and the Q-axis is changed from a value of (1,5) to a value of (-5,1). The axis-exchanged data is deinterleaved in first and second deinterleavers 32 and 33, respectively. As described above, the sync is found in Viterbi decoder 36.

The above-described system for restoring the multi level/phase modulation data according to an embodiment of the present invention shifts the deinterleaving sync by a predetermined interval repetitively until the data deinterleaved in the deinterleaver is synchronised, to perform a deinterleaving operation. Also, the restoring system judges that a ±90° phase error is generated when a sync is shifted by one cycle, and exchanges the I-axis with the Q-axis of the input data to again perform deinterleaving and restoring processes. Thus, a ±90° phase error as well as a ±180° phase error generated in the input data is adaptively corrected, thereby further improving reliability of the restored data.

## Claims

1. A method for receiving multilevel/phase modulation data and restoring the multilevel/phase modulation data into original data, the method comprising the steps of:
receiving first and second axis data on first and second respective channels, said first and second axis data being obtained by demodulating the received multilevel/phase modulation data;
deinterleaving the first axis data from the first channel using a first deinterleaving means and deinterleaving the second axis data from the second channel using a second deinterleaving means;
Viterbi decoding the deinterleaved data and discriminating if the Viterbi decoded data is synchronised;
shifting a data deinterleaving sync position at the deinterleaving step by a predetermined interval when the Viterbi-decoded data is not synchronised; and
the method being characterized in that the first axis data and the second axis data are exchanged with each other if a sync is not matched after repetitively discriminating whether the sync is matched while the sync position at the deinterleaving sync shifting step is shifted successively for one cycle, exchanging of the first and second axis data being achieved by switching the first axis data received on the first channel to thereafter be deinterleaved using the second deinterleaving means and switching the second axis data received on the second channel, to thereafter be deinterleaved using the first deinterleaving means.

2. A method according to claim 1, wherein the first axis data comprises I-axis data and the second axis data comprises Q-axis data.

3. A method according to claim 1 or 2, wherein said step of exchanging the first axis data and the second axis data with each other comprises the steps of:
generating a predetermined out-of-sync signal if the sync is not matched as a result of performing said Viterbi decoding;
counting the out-of-sync signal;
generating a control signal when the counted result is equal to the number of times which shifts the deinterleaving sync position for one cycle; and
exchanging the axes of the first axis data and second axis data with each other with respect to the control signal.

4. A method according to claim 3, wherein said step of exchanging the axes comprises the steps of:
selecting the first axis data according to the control signal to supply the selected first axis data to the second axis transmission channel; and
selecting the second axis data according to the control signal to supply the selected second axis data to the first axis transmission channel.

5. A method according to claim 4, wherein said step of switching the first axis to the second axis comprises the step of inverting the first axis data and converting the inverted data into the second axis data.

6. An apparatus for receiving multi level/phase modulation data and restoring the multi level/phase modulation data into original data into original data, said apparatus comprising:
input ports (11, 12) arranged, in use, to receive first and second axis data on first and second respective channels, said first and second axis data being obtained by demodulating the received multi level/phase modulation data;
an axis exchanger portion (31) arranged in use to receive the first axis data, the second axis data and a predetermined control signal, which control signal is normally in a first state, and selectively to exchange the axes of the first axis data and the second axis data according to a change in state of the control signal;
deinterleaving means (32, 33) arranged, in use, to deinterleave the first axis data supplied on the first channel using a first deinterleaver (32) and to deinterleave the second axis data supplied on the second channel using a second deintereaver (33) when the control signal is in the first state and, when the control signal is changed to a second state, the deinterleaving means being arranged such that the second deinterleaver (33) is arranged to deinterleave the first axis data and the first deinterleaver (32) is arranged to deinterleave the second axis data;
a Viterbi-decoding portion (36) arranged, in use, to decode the deinterleaved data according to a Viterbi algorithm and to output a predetermined out-of-sync signal when it is discriminated that the Viterbi-decoded data is synchronized as a result; and
a sync detecting portion arranged, in use, to detect the out-of-sync signal output from the Viterbi-decoding portion to supply a sync adjustment control signal for shifting a data deinterleaving sync position to the deinterleaving means and to change the control signal to the second state and thereby control axis exchange by means of the axis exchanger.

7. Apparatus according to claim 6, wherein the first axis data comprises I-axis data, and the second axis data comprises Q-axis data.

8. An apparatus according to claim 6 or 7, wherein said axis exchanger portion comprises:
a first switch (SW1) of which the input port is connected to a first axis data input terminal, a first output terminal is an input port of said first deinterleaver, and a second output terminal is connected to an input port of said second deinterleaver via an inverter; and
a second switch (SW2) of which the input port is connected to a second axis data input terminal, a first output terminal is the other input port of said second deinterleaver, and a second output terminal is connected to the other input port of said first deinterleaver.

9. An apparatus according to claim 6, 7 or 8, wherein said sync detector comprises:
a counter arranged in use to receive an out-of-sync signal supplied from said Viterbi decoder as clock and to perform a counting; and
means to generate said control signal for said axis exchanger when the counted result of said counter reaches a value of a predetermined modulo-N.

10. An apparatus according to claim 9, wherein said modulo-N value of said counter is equal to the number of times of continuously performing for one cycle when the deinterleaving sync is shifted according to said sync adjustment control signal in said deinterleaver.

## Patentansprüche

1. Verfahren zum Empfang mehrwertiger Phasenmodulationsdaten und zur Wiederherstellung der mehrwertigen Phasenmodulationsdaten zu ursprünglichen Daten, wobei das Verfahren die Schritte umfaßt:
Empfangen von Daten einer ersten und zweiten Achse auf einem jeweiligen ersten und zweiten Kanal, wobei die Daten der ersten und zweiten Achse durch Demodulation der empfangenen mehrwertigen Phasenmodulationsdaten erhalten werden;
Entschachteln der Daten der ersten Achse von dem ersten Kanal, wobei eine erste Entschachtelungseinrichtung verwendet wird, und Entschachteln der Daten der zweiten Achse von dem zweiten Kanal, wobei eine zweite Entschachtelungseinrichtung verwendet wird;
Viterbi-Decodieren der entschachtelten Daten und Unterscheiden, ob die Viterbidecodierten Daten synchronisiert sind;
Verschieben einer Datenentschachtelungs-Synchronisierposition in dem Entschachtelungsschritt um ein vorbestimmtes Intervall, wenn die Viterbi-decodierten Daten nicht synchronisiert sind; und
wobei das Verfahren **dadurch gekennzeichnet ist,** daß die Daten der ersten Achse und die Daten der zweiten Achse miteinander ausgetauscht werden, wenn eine Synchronisierung nicht paßt, nachdem wiederholt unterschieden wurde, ob die Synchronisierung paßt, während die Synchronisierposition bei dem Entschachtelungs-Synchronisierverschiebungschritt aufeinanderfolgend um einen Zyklus verschoben wird, wobei der Austausch der Daten der ersten und zweiten Achse erreicht wird, indem die auf dem ersten Kanal erhaltenen Daten der ersten Achse umgeschaltet werden, um danach unter Verwendung der zweiten Entschachtelungseinrichtung entschachtelt zu werden, und die Daten der zweiten Achse, die auf dem zweiten Kanal erhalten werden, umgeschaltet werden, damit sie unter Verwendung der ersten Entschachtelungseinrichtung entschachtelt werden.

2. Verfahren gemaß Anspruch 1, wobei die Daten der ersten Achse Daten der I-Achse umfassen und die Daten der zweiten Achse Daten der Q-Achse umfassen.

3. Verfahren gemäß Anspruch 1 oder 2, wobei der Austauschschritt der Daten der ersten Achse und der Daten der zweiten Achse miteinander die Schritte umfaßt:
Erzeugen eines vorbestimmten Außersynchronisierungssignals, wenn die Synchronisierung nicht paßt als Ergebnis der Durchführung der Viterbi-Decodierung;
Zählen des Außersynchronisierungssignals;
Erzeugen eines Steuersignals, wenn das Zählergebnis gleich der Anzahl der Male ist, die die Entschachtelungs-Synchronisierposition um einen Zyklus verschiebt; und
Austauschen der Achsen der Daten der ersten Achse und der Daten der zweiten Achse gegeneinander in bezug auf das Steuersignal.

4. Verfahren gemäß Anspruch 3, wobei der Austauschschritt der Achsen die Schritte umfaßt:
Auswählen der Daten der ersten Achse gemäß dem Steuersignal, um die ausgewählten Daten der ersten Achse dem Übertragungskanal der zweiten Achse zuzuführen; und
Auswählen der Daten der zweiten Achse gemäß dem Steuersignal, um die ausgewählten Daten der zweiten Achse dem Übertragungskanal der ersten Achse zuzuführen.

5. Verfahren gemäß Anspruch 4, wobei der Schritt zum Umschalten der ersten Achse auf die zweite Achse den Schritt umfaßt, die Daten der ersten Achse umzukehren und die umgekehrten Daten in Daten der zweiten Achse umzuwandeln.

6. Vorrichtung zum Empfang mehrwertiger Phasenmodulationsdaten und zur Wiederherstellung der mehrwertigen Phasenmodulationsdaten zu ursprünglichen Daten, wobei die Vorrichtung umfaßt:
Eingangsanschlüsse (11, 12) die zum Empfangen von Daten einer ersten und zweiten Achse auf einem jeweiligen ersten und zweiten Kanal betreibbar sind, wobei die Daten der ersten und zweiten Achse durch Demodulation der empfangenen mehrwertigen Phasenmodulationsdaten erhalten werden;
einen Achsenaustauschabschnitt (31), der betreibbar ist, Daten der ersten Achse, Daten der zweiten Achse und ein vorbestimmtes Steuersignal zu erhalten, wobei das Steuersignal normalerweise in einem ersten Zustand ist, und selektiv die Achsen der Daten der ersten Achse und der Daten der zweiten Achse entsprechend einer Zustandsänderung des Steuersignals auszutauschen;
eine Entschachtelungseinrichtung (32, 33), die betreibbar ist, die Daten der ersten Achse, die auf dem ersten Kanal zugeführt werden, unter Verwendung eines ersten Entschachtelers (32) zu entschachteln, und die Daten der zweiten Achse, die auf dem zweiten Kanal zugeführt werden, unter Verwendung eines zweiten Entschachtelers (33) zu entschachteln, wenn das Steuersignal in dem ersten Zustand ist, und, wenn das Steuersignal in einen zweiten Zustand geändert wird, die Entschachtelungseinrichtung so ausgebildets ist, daß der zweite Entschachteler (33) eingerichtet ist, die Daten der ersten Achse zu entschachteln, und der erste Entschachteler (32) eingerichtet ist, die Daten der zweiten Achse zu entschachteln;
einen Viterbi-Decodierabschnitt (36), der betreibbar ist, die entschachtelten Daten entsprechend einem Viterbi Algorithmus zu decodieren und ein vorbestimmtes Außersynchronisierungssignal auszugeben, wenn als Ergebnis entschieden wird, daß die Viterbi-decodierten Daten synchronisiert sind; und
einen Synchronisiererfassungsabschnitt, der betreibbar ist, das von dem Viterbi-Decodierabschnitt ausgegebene Außersynchronisierungssignal zu erfassen, um ein Synchronisiereinstellungs-Steuersignal zur Verschiebung einer Datenentschachtelungs-Synchronisierposition der Entschachtelungseinrichtung zuzuführen und das Steuersignal in den zweiten Zustand zu ändern und dadurch den Achsenaustausch mittels des Achsenaustauschers zu steuern.

7. Vorrichtung gemäß Anspruch 6, wobei die Daten der ersten Achse Daten der I-Achse umfassen und die Daten der zweiten Achse Daten der Q-Achse umfassen.

8. Vorrichtung gemäß Anspruch 6 oder 7, wobei der Achsenaustauscherabschnitt umfaßt:
einen ersten Schalter (SW1), dessen Eingangsanschluß mit einer Eingangsklemme für Daten der ersten Achse verbunden ist, dessen eine erste Ausgangsklemme ein Eingangsanschluß des ersten Entschachtelers ist, und dessen zweite Ausgangsklemme mit einem Eingangsanschluß des zweiten Entschachtelers über eine Umkehrschaltung verbunden ist: und
einen zweiten Schalter (SW2), dessen Eingangsanschluß mit einer Eingangsklemme für Daten der zweiten Achse verbunden ist, dessen erste Ausgangsklemme der andere Eingangsanschluß des zweiten Entschachtelers ist und dessen zweite Ausgangsklemme mit dem anderen Eingangsanschluß des ersten Entschachtelers verbunden ist.

9. Vorrichtung gemäß Anspruch 6, 7 oder 8, wobei der Synchronisierdetektor umfaßt:
einen Zähler, der betreibbar ist, ein Außersynchronisierungssignal zu erhalten, das von dem Viterbi-Decodierer als Takt zugeführt wird, und einen Zählvorgang durchzuführen; und
eine Einrichtung, das Steuersignal für den Achsenaustauscher zu erzeugen, wenn das Zählergebnis des Zählers einen Wert eines vorbestimmten Modulo N erreicht.

10. Vorrichtung gemäß Anspruch 9, wobei der Modulo N Wert des Zählers gleich der Anzahl der Male der fortlaufenden Durchführung um einen Zyklus ist, wenn die Entschachtelungssynchronisierung entsprechend dem Synchronisiereinstellungs-Steuersignal in dem Entschachteler verschoben wird.

## Revendications

1. Procédé de réception de données à modulation de phase à plusieurs niveaux et de rétablissement de ces données en données originales, procédé comprenant les étapes selon lesquelles :
on reçoit des données de premier et de deuxième axes sur des première et deuxième voies respectives, lesdites données de premier et de deuxième axes étant obtenues par démodulation des données à modulation de phase à plusieurs niveaux reçues,
on désentrelace les données de premier axe venant de la première voie par un premier moyen de désentrelacement et on désentrelace les données de deuxième axe venant de la deuxième voie par un deuxième moyen de désentrelacement,
on effectue un décodage de Viterbi des données désentrelacées et on discrimine si les données ainsi décodées sont synchronisées,
on décale d'un intervalle déterminé, dans l'étape de désentrelacement, d'une position de synchronisation de désentrelacement de données lorsque les données décodées en Viterbi ne sont pas synchronisées, et
le procédé étant caractérisé par le fait qu'on échange entre elles les données de premier axe et les données de deuxième axe si une synchronisation n'est pas adaptée après discrimination répétitive si la synchronisation est adaptée pendant que la position de synchronisation dans l'étape de décalage de synchronisation de désentrelacement est décalée successivement d'un cycle, l'échange des données de premier et de deuxième axes étant réalisé par commutation des données de premier axe reçues sur la première voie pour qu'elles soient après cela désentrelacées par le deuxième moyen de désentrelacement et on commute les données de deuxième axe reçues sur la deuxième voie pour qu'elles soient après cela désentrelacées par le premier moyen de désentrelacement.

2. Procédé selon la revendication 1, dans lequel les données de premier axe comprennent des données d'axe I et les données de deuxième axe comprennent des données d'axe Q.

3. Procédé selon l'une des revendications 1 et 2, dans lequel ladite étape d'échange entre elles des données de premier axe et des données de deuxième axe comprend les étapes selon lesquelles :
on produit un signal de non-synchronisation déterminé si la synchronisation n'est pas adaptée comme résultat de l'exécution dudit décodage de Viterbi,
on compte le signal de non-synchronisation,
on produit un signal de commande lorsque le résultat du comptage est égal au nombre de fois que la position de synchronisation de désentrelacement est décalée d'un cycle, et
on échange les axes des données de premier axe et les données de deuxième axe entre eux selon le signal de commande.

4. Procédé selon la revendication 3, dans lequel ladite étape d'échange des axes comprend les étapes selon lesquelles :
on sélectionne les données de premier axe selon le signal de commande pour l'envoi des données de premier axe sélectionnées à la voie de transmission de deuxième axe, et
on sélectionne les données de deuxième axe selon le signal de commande pour l'envoi des données de deuxième axe sélectionnées à la voie de transmission de premier axe.

5. Procédé selon la revendication 4, dans lequel ladite étape de commutation du premier axe au deuxième axe comprend l'étape d'inversion des données de premier axe et la conversion des données inversées en les données de deuxième axe.

6. Appareil de réception de données à modulation de phase à plusieurs niveaux et de rétablissement de ces données en données originales, ledit appareil comprenant :
des entrées (11, 12) agencées, en service, pour recevoir des données de premier et de deuxième axes sur des première et deuxième voies respectives, lesdites données de premier et de deuxième axes étant obtenues par démodulation des données à modulation de phase à plusieurs niveaux reçues,
une partie échangeuse d'axes (31) agencée en service pour recevoir les données de premier axe, les données de deuxième axe et un signal de commande déterminé, lequel signal de commande est normalement dans un premier état, et sélectivement échanger les axes des données de premier axe et des données de deuxième axe selon un changement d'état du signal de commande,
des moyens de désentrelacement (32, 33) agencés, en service, pour désentrelacer les données de premier axe fournies sur la première voie au moyen d'un premier désentrelaceur (32) et désentrelacer les données de deuxième axe fournies sur la deuxième voie au moyen d'un deuxième désentrelaceur (33) lorsque le signal de commande est dans le premier état et, lorsque le signal de commande est passé dans un deuxième état, les moyens de désentrelacement étant agencés de façon que le deuxième désentrelaceur (33) soit agencé pour désentrelacer les données de premier axe et le premier désentrelaceur (32) soit agencé pour désentrelacer les données de deuxième axe,
une partie décodage de Viterbi (36) agencée, en service, pour décoder les données désentrelacées selon un algorithme de Viterbi et émettre un signal de non-synchronisation déterminé lorsqu'il est discriminé que les données décodées sont synchronisées comme résultat, et
une partie détection de synchronisation agencée, en service, pour détecter le signal de non-synchronisation émis de la partie décodage de Viterbi pour envoyer aux moyens de désentrelacement un signal de commande de réglage de synchronisation pour décaler une position de synchronisation de désentrelacement de données et faire passer le signal de commande dans le deuxième état et par là commander l'échange d'axes au moyen de l'échangeur d'axes.

7. Appareil selon la revendication 6, dans lequel les données de premier axe comprennent des données d'axe I et les données de deuxième axe comprennent des données d'axe Q.

8. Appareil selon l'une des revendications 6 et 7, dans lequel ladite partie échangeuse d'axes comprend :
un premier commutateur (SW1) dont l'entrée est reliée à une borne d'entrée de données de premier axe, une première borne de sortie est une entrée dudit premier désentrelaceur et une deuxième borne de sortie est reliée à une entrée dudit deuxième désentrelaceur par l'intermédiaire d'un inverseur, et
un deuxième commutateur (SW2) dont l'entrée est reliée à une borne d'entrée de données de deuxième axe, une première borne de sortie est l'autre entrée dudit deuxième désentrelaceur et une deuxième borne de sortie est reliée à l'autre entrée dudit premier désentrelaceur.

9. Appareil selon l'une des revendications 6, 7 et 8, dans lequel ledit détecteur de synchronisation comprend :
un compteur agencé en service pour recevoir un signal de non-synchronisation émis par ledit décodeur de Viterbi comme horloge et exécuter un comptage, et
un moyen de production dudit signal de commande pour ledit échangeur d'axes lorsque le résultat de comptage dudit compteur atteint une valeur d'un modulo-N déterminé.

10. Appareil selon la revendication 9, dans lequel ladite valeur de modulo-N dudit compteur est égale au nombre d'exécutions en continu d'un cycle lorsque la synchronisation de désentrelacement est décalée selon ledit signal de commande de réglage de synchronisation dans ledit désentrelaceur.
